**Europäisches Patentamt**

**European Patent Office**

**Office européen des brevets**

(19)

(11) Veröffentlichungsnummer : **0 170 883**
**B1**

(12) **EUROPÄISCHE PATENTSCHRIFT**

(45) Veröffentlichungstag der Patentschrift :
**21.12.88**

(21) Anmeldenummer : **85108244.6**

(22) Anmeldetag : **03.07.85**

(51) Int. Cl.⁴ : **H 01 M 10/42, H 01 M 2/34,**
**H 01 H 79/00, H 02 H 7/18**

(54) **Überbrückungselement.**

(30) Priorität : **17.07.84 DE 3426199**

(43) Veröffentlichungstag der Anmeldung :
**12.02.86 Patentblatt 86/07**

(45) Bekanntmachung des Hinweises auf die Patenterteilung : **21.12.88 Patentblatt 88/51**

(84) Benannte Vertragsstaaten :
**AT BE FR GB IT NL**

(56) Entgegenhaltungen :
**EP—A— 0 064 655**
**WO—A—85 /040 45**
**DE—A— 1 613 968**
**US—A— 3 213 345**

(73) Patentinhaber : **Asea Brown Boveri Aktiengesellschaft**
**Kallstadter Strasse 1**
**D-6800 Mannheim-Käfertal (DE)**

(72) Erfinder : **Kahlen, Hans, Dr. Dipl.-Phys.**
**Holbeinstrasse 11**
**D-6940 Weinheim (DE)**
Erfinder : **Jahnke, Bernd, Dr. Dipl.-Phys.**
**Adalbert-Seifrizstrasse 10**
**D-6903 Neckargemünd (DE)**
Erfinder : **Schmidt, Conrad, Dr. Dipl.- Phys.**
**Wielandstrasse 2**
**D-6901 Gaiberg (DE)**
Erfinder : **Ziegenbein, Botho, Dr. Dipl.- Phys.**
**Eichendorffstrasse 4**
**D-6901 Neckarsteinach (DE)**

(74) Vertreter : **Kempe, Wolfgang, Dr. et al**
**c/o BROWN, BOVERI & CIE AG ZPT Postfach 351**
**D-6800 Mannheim 31 (DE)**

## Beschreibung

Die Erfindung bezieht sich auf ein Überbrückungselement gemäß dem Oberbegriff des Patentanspruches 1.

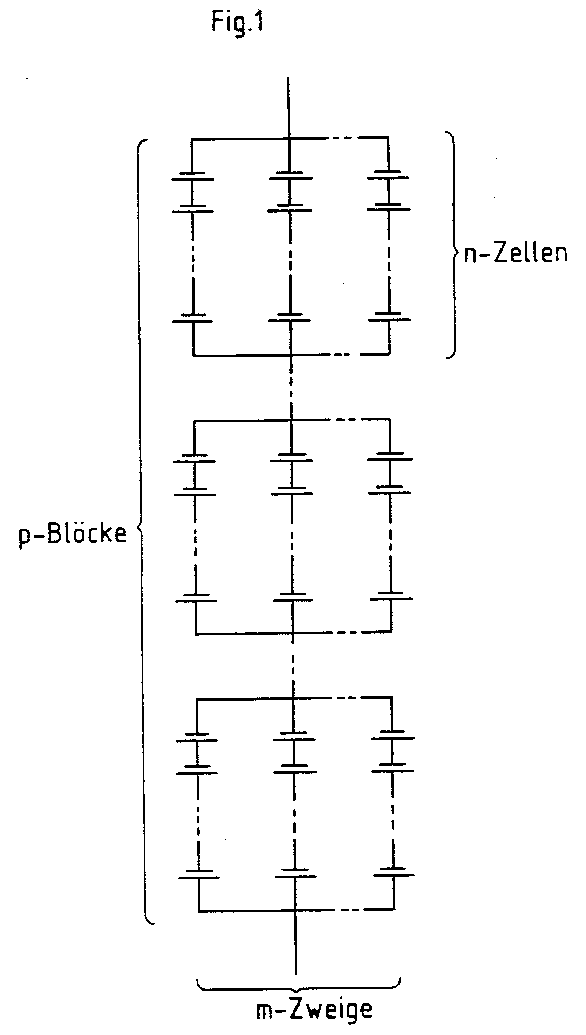

Solche Überbrückungselemente finden vor allem in Hochtemperatur-Batterien eine Anwendung, die aus wiederaufladbaren elektrochemischen Speicherzellen aufgebaut sind. Sie dienen hier zur Überbrückung von zerstörten Speicherzellen, die auf diese Weise aus dem Stromkreis der Hochtemperatur-Batterie herausgetrennt werden können, so daß die Funktionsfähigkeit der Hochtemperatur-Batterie im wesentlichen erhalten bleibt. Bei Hochtemperatur-Batterien, die für Fahrzeuge verwendet werden, besteht die Notwendigkeit, viele elektrochemische Speicherzellen in Serie und nur wenige Speicherzellen parallel zu schalten. Gründe hierfür sind dadurch gegeben, daß der Energieinhalt einer solchen Batterie im allgemeinen kleiner als 40 kWh sein wird, der Energieinhalt einer einzelnen Speicherzelle ist jedoch größer als 80 Wh. Daraus folgt, daß eine Fahrzeugbatterie nicht mehr als 500 Speicherzellen enthalten wird. Falls mit einer solchen Batterie bei einer Spannung der Einzelspeicherzelle von etwa 2 Volt insgesamt 200 Volt erzeugt werden sollen, müssen 100 Speicherzellen in Serie geschaltet werden. Das bedeutet, daß höchstens fünf Speicherzellen parallel geschaltet werden können. Da die Redundanz bei fünf parallel geschalteten Speicherzellen noch nicht sehr groß ist, ist es zweckmäßig, möglichst viele Speicherzellen in Serie zu schalten. Derartige Zweige können dann parallel geschaltet werden, so daß sich das in Figur 1 dargestellte Schaltschema ergibt. Die Speicherzellen sind in dieser Zeichnung nur durch ihre elektrischen Anschlußpole dargestellt. Wie anhand dieser Zeichnung zu sehen ist, sind jeweils N-Speicherzellen zu einem Zweig serienartig zusammengeschaltet. M-Zweige mit jeweils N-Speicherzellen sind parallel geschaltet und bilden einen Block. Die gesamte Batterie ist aus p solchen seriengeschalteten Blöcken zusammengesetzt. Sie enthält gemäß dem in Figur 1 gezeigten Beispiel n x m x p Speicherzellen.

Probleme treten bei der beschriebenen Schaltung dann auf, wenn eine Speicherzelle defekt wird. Bei Natrium/Schwefel-Speicherzellen hat es sich gezeigt, daß ein Defekt meist dadurch auftritt, daß der Festelektrolyt Risse bekommt, so daß die Reaktionsstoffe Natrium und Schwefel chemisch direkt miteinander reagieren können. Die Speicherzelle gibt dann keine Spannung mehr ab und weist einen großen Innenwiderstand auf, der meist um mehr als einen Faktor 2 größer ist als der ohmsche Widerstand einer intakten Speicherzelle. Die Folge hiervon ist, daß durch den Zweig mit der defekten Speicherzelle nur ein sehr geringer oder kein Lade- oder Entladestrom fließt. Ist der Widerstand der defekten Speicherzelle sehr groß, so fällt der Zweig, in dem die Speicherzelle angeordnet ist, vollständig für die Stromversorgung aus. Dies bedeutet, daß die Kapazität der Gesamtbatterie unter diesen Bedingungen um den Faktor (m-1)/m kleiner ist als diejenige einer intakten Batterie.

Aus der DE-PS 3 117 385 ist ein Überbrückungselement bekannt, das für die Überbrückung einer einzelnen Speicherzelle vorgesehen ist. Dieses Überbrückungselement wird im wesentlichen durch zwei direkt aneinander grenzende miteinander verbindbare Räume gebildet. Der erste Raum ist mit einem flüssigen Metall oder einer zersetzbaren Metallverbindung gefüllt. Das Metall muß mindestens bei der Betriebstemperatur der Speicherzelle flüssig sein. Bei Verwendung einer Metallverbindung muß sich diese bei dieser Temperatur zersetzen. Der zweite Raum des Überbrückungselements enthält die in einem definierten Abstand voneinander angeordneten Kontaktflächen von zwei Elektroden. Wird die Speicherzelle hochohmig, so kommt es zu einer Spannungsumkehr an ihren Elektroden und damit auch zu einer Spannungsumkehr an den Anschlußpolen des Überbrückungselements. Hierdurch wird das in dem ersten Raum enthaltene Metall in den zweiten Raum transportiert. Ist dieser vollständig mit dem Metall gefüllt, so werden die beiden in diesem Raum angeordneten Elektroden durch das Metall elektrisch leitend verbunden, so daß der von den benachbarten Speicherzellen der defekten Speicherzelle kommende Strom durch dieses Überbrückungselement fließen kann. Nachteilig ist bei diesem Überbrückungselement, daß es zum einen sehr aufwendig in seiner Konstruktion ist, und zudem viel Platz beansprucht, der gerade bei einer Hochtemperatur-Speicherbatterie, die von einer thermischen Isolierung umgeben ist, nicht zur Verfügung steht.

Aus der DE-OS 1 613 968 ist eine Schmelzsicherung mit Schmelzlot für elektrische Anlagenteile, insbesondere Halbleiterbauelemente, bekannt. Die Schmelzsicherung wird durch zwei in Reihe geschaltete Dioden gebildet, die in entgegengesetzter Richtung gepolt sind. Jede Diode ist beidseitig von einem Schmelzlot umgeben. Diese Vorrichtung kann bspw. einer Thyristorkette parallel geschaltet werden. Wird ein Thyristor dieser Kette nicht gezündet, so erhöht sich die Spannung an den beiden zur Kette parallel geschalteten Dioden. Der sonst durch die Thyristorkette fließende Strom fließt jetzt durch die Dioden. Hierdurch kommt es im Bereich der Dioden und im Bereich des angrenzenden Schmelzlotes zu einer Temperaturerhöhung, so daß das Schmelzlot zu schmelzen beginnt. Die beidseitig der Dioden angeordneten Schmelzlote fließen zusammen, wodurch es zum Kurzschluß der Dioden kommt.

In der US-PS 3 213 345 ist ein Überbrückungselement beschrieben, das durch ein Halbleiterbauelement und eine Kontaktfeder gebildet wird. Beide sind im Inneren eines Gehäuses angeordnet, das wenigstens eine elektrisch leitende Begrenzungswand aufweist. Mit dieser elektrisch leitenden Begrenzungswand ist das Halbleiterbauelement direkt verbunden. Die L-förmig ausgebildete Kontaktfeder steht über ein Lot mit der n-leitenden Schicht des Halbleiterbauelementes in elektrisch leitendem Kontakt. Das zweite Ende der Kontaktfeder ist zur Bildung des zweiten elektrischen Anschlußpols nach außen geführt. Das zur Verbindung des Halbleiterbauelementes mit der Kontaktfeder verwendete Lot weist einen niedrigen Schmelzpunkt auf. Kommt es zu einer Temperaturerhöhung innerhalb des Überbrückungselements, so wird die elektrisch leitende Verbindung zwischen dem Halbleiterbauelement und der Kontaktfeder unterbrochen und es wird eine elektrisch leitende Verbindung zwischen dem ersten Anschlußpol des metallischen Gehäuses und der Kontaktfeder ausgebildet, so daß das Halbleiterbauelement aus dem Stromkreis ausgeschlossen ist.

In der WO-A-8 504 045 ist ein temperaturgesteuertes Kurzschlußelement beschrieben, dessen wesentlicher Bestandteil eine Diode ist. Diese Diode ist beidseitig von zwei Bauelementen umgeben, die aus einem leicht schmelzbaren Material gefertigt sind. In dem speziell beschriebenen Ausführungsbeispiel sind diese Bauelemente aus Blei hergestellt. Kommt es zu einer Temperaturerhöhung von etwa 190 °C so beginnen diese beiden Bauelemente zu schmelzen. Die zusammenfließenden Materialien bewirken eine elektrisch leitende Überbrückung der Diode, so daß diese aus dem Stromkreis herausgetrennt ist.

Der Erfindung liegt die Aufgabe zugrunde, ein Überbrückungselement für ein elektrisches Bauteil, insbesondere eine elektrochemische Speicherzelle zu schaffen, das in seinen Abmessungen klein dimensioniert ist, einen einfachen Aufbau aufweist, und zudem billig hergesellt werden kann.

Diese Aufgabe wird erfindungsgemäß durch die kennzeichnenden Merkmale des Patentanspruches 1 gelöst.

Erfindungsgemäß wird jedem elektrischen Bauteil, das im Bedarfsfall überbrückt werden soll, ein solches Überbrückungselement parallel geschaltet. Bei Hochtemperatur-Speicherbatterien, die aus Speicherzellen auf der Basis von Natrium und Schwefel aufgebaut sind, werden die beiden Anschlußelemente einer jeden Speicherzelle über ein solches Überbrückungselement miteinander verbunden.

Das Überbrückungselement ist so ausgebildet, daß bei einer intakten Speicherzelle, die in Serie mit weiteren Speicherzellen geschaltet ist, der Strom durch die Speicherzelle selbst fließt. Kommt es zu einer Störung innerhalb der Speicherzelle, beispielsweise zu einem Bruch des aus Betaaluminiumoxid gefertigten Festelektrolyten, der die beiden Reaktantenräume der Speicherzelle voneinander trennt, so wird die Speicherzelle hochohmig und der Stromfluß durch sie unterbrochen. Das erfindungsgemäße Überbrückungselement ist so ausgebildet, daß es erst dann anspricht, wenn die Speicherzelle, zu der es parallel geschaltet ist, hochohmig wird. Das Überbrückungselement übernimmt den gesamten Stromfluß der sonst durch die Speicherzelle fließt. Dieser Stromfluß bewirkt eine Temperaturerhöhung innerhalb des Überbrückungselementes. Da die Überbrückungselemente zu den Speicherzellen parallel geschaltet und außerdem innerhalb der Hochtemperatur-Batterie mit angeordnet sind, beträgt die Umgebungstemperatur der Überbrückungselemente etwa 350 Grad Celsius, was der Arbeitstemperatur der einzelnen Speicherzellen entspricht. Durch einen Strom, der nach dem hochohmig werden einer Speicherzelle durch das zu ihr parallel geschaltete Überbrückungselement fließt, kommt es zu einer Temperaturerhöhung innerhalb des Überbrückungselementes auf Werte über 570 Grad Celsius und wesentlich mehr. Erfindungsgemäß ist das Halbleiterbauelement als Siliziumdiode ausgebildet. Das Halbleiterbauelement ist scheibenförmig ausgebildet. Auf seine beiden Deckflächen ist jeweils eine elektrisch leitende Schicht aus Aluminium oder einer Aluminiumlegierung aufgetragen. Bei einer Temperatur über 570 Grad Celsius und mehr beginnen die Schichten aus Aluminium und mindestens die äußere Schicht des Halbleiterbauelement zu schmelzen. Sie bilden zusammen mit der Diode ein Eutektikum, das als niederohmiges Kurzschlußelement wirkt.

An die auf die Oberflächen des Halbleiter-Bauelements aufgetragenen Schichten aus Aluminium oder einer Aluminiumlegierung schließt sich jeweils eine Nickel-Chrom-Molybdän-Schicht an. Die Nickel-Chrom-Molybdän-Schicht bewirkt eine bessere Kontaktierung des jeweilen elektrischen Anschlußelements mit dem Halbleiterbauelement. Auf diese folgt eine Silberschicht, an welche sich nach außenhin eine Molybdänschicht anschließt. Jede der beiden äußeren Molybdänschichten ist mit einem elektrischen Anschlußelement verbunden. Die zwischen der Nickel-Chrom-Molybdän-Schicht und der äußeren Molybdänschicht angeordnete Silberschicht soll Wärmeausdehnungen der Molybdänschicht aufnehmen und ausgleichend wirken. Das Halbleiterbauelement sowie die angrenzenden Schichten sind von einer Passivierungsschicht umgeben. Das gesamte Überbrückungselement kann zum Schutz innerhalb eines Gehäuses angeordnet werden.

Die Erfindung wird nachfolgend anhand von Zeichnungen näher erläutert.

Es zeigen :

Figur 1 : Die Schaltung von Speicherzellen innerhalb einer Hochtemperatur-Speicherbatterie,

Figur 2 : ein erfindungsgemäßes Überbrückungselement,

Figur 3 : eine Serienschaltung von drei Speicherzellen, wobei zu jeder Speicherzelle ein Überbrückungselement parallel geschaltet ist.

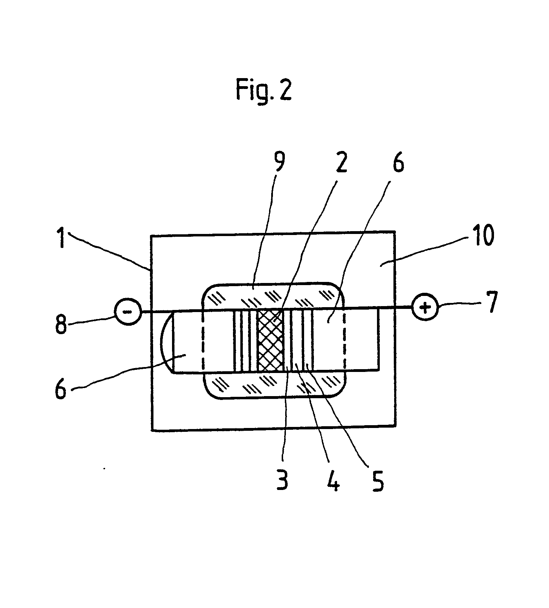

Das in Figur 2 dargestellte Überbrückungselement 1 wird im wesentlichen durch ein Halbleiterbauelement 2 gebildet, das bei dem hier dargestellten Ausführungsbeispiel als scheibenförmige Siliziumdiode gefertigt ist. Auf die beiden runden Deckflächen des Halbleiter-Bauelements ist jeweils eine elektrisch leitende Schicht 3 aus Aluminium aufgetragen. Auf jede dieser beiden Aluminiumschichten 3 folgt nach außenhin eine Nickel-Chrom-Molybdän-Schicht 4. Eine auf die beiden Schichten 4 aufgebrachte Silberschicht 5 ist zum Ausgleich der auftretenden Wärmeausdehnungen der sich anschließenden Mölybdänschichten 6 vorgesehen. Wie Figur 2 zeigt ist das erfindungsgemäße Überbrückungselement 1 symmetrisch aufgebaut, wobei die gedachte Symmetrieachse durch das Halbleiter-Bauelement 2 gebildet wird. Die beiden äußeren Molybdänschichten 6 sind zur direkten Verbindung der elektrischen Anschlußelemente 7 und 8 vorgesehen. Es handelt sich hierbei um jeweils einen Draht, der in je eine Molybdänschicht 6 eingelötet ist. Die Nickel-Chrom-Molybdän-Schichten 4, von denen jeweils eine auf die Aluminiumschicht 3 aufgebracht ist, sind zur besseren Kontaktierung der elektrischen Anschlußelemente 7 und 8 mit dem Halbleiter-Bauelement 2 vorgesehen. Bei dem hier dargestellten Ausführungsbeispiel ist mit 7 das positive Anschlußelement und mit 8 das negative Anschlußelement bezeichnet. Wie Figur 2 weiter zeigt, sind das Halbleiter-Bauelement 2 und die auf selbiges aufgetragenen Schichten 3, 4, 5 und 6 von einer schützenden Glaspassivierungsschicht 9 umgeben. Das gesamte Überbrückungselement ist in ein schützendes Gehäuse 10 eingesetzt, aus dem lediglich die freien Enden der beiden elektrischen Anschlußelemente 7 und 8 herausragen.

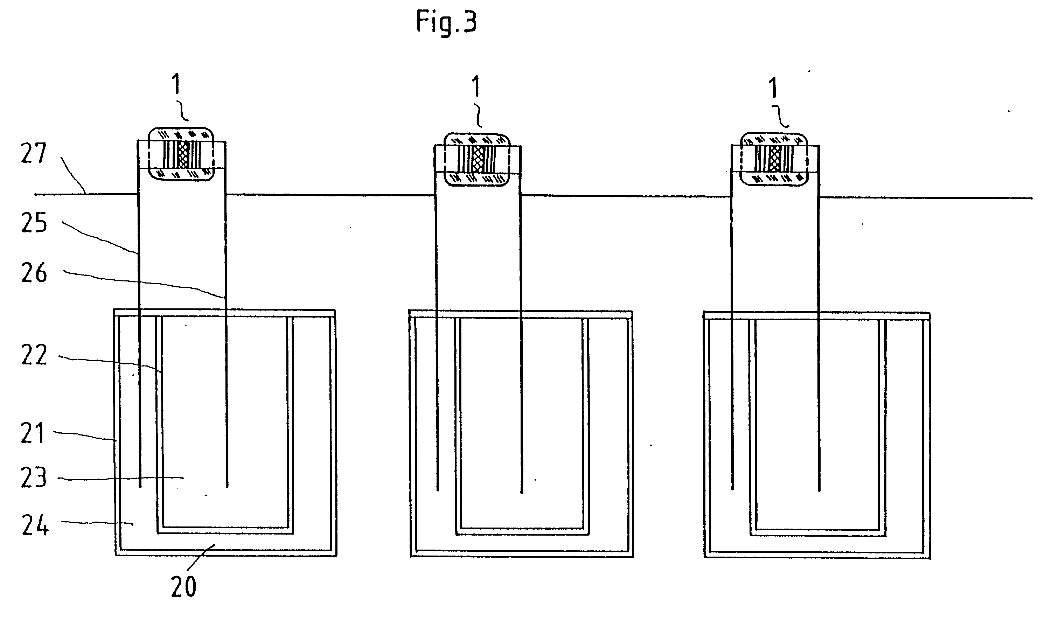

Figur 3 zeigt die Serienschaltung von drei elektrochemischen Speicherzellen, die zu einer Hochtemperatur-Speicherbatterie (hier nicht dargestellt) gehören. Die Speicherzellen 20 sind bei der hier dargestellten Ausführungsform nur schematisch dargestellt. Jede Speicherzelle 20 wird nach außenhin von einem metallischen Gehäuse 21 begrenzt, innerhalb dessen ein becherförmiger Festelektrolyt 22 angeordnet ist. Dieser ist aus Betaaluminium gefertigt und trennt die beiden Reaktandenräume 23 und 24 voneinander. Bei dem hier dargestellten Ausführungsbeispiel ist in den Festelektrolyten 22, insbesondere in den Anodenraum 23 Natrium (hier nicht dargestellt) eingefüllt, während der zwischen dem metallischen Gehäuse und dem Festelektrolyten 22 angeordnete Kathodenenraum 24 den Schwefel enthält (hier nicht dargesellt). In jeden Reaktandenraum 23, 24 ragt ein Stromkollektor 25 bzw. 26. Wie Figur 3 zeigt steht der in den Festelektrolyten 22 hineinragende Stromkollektor 26 jeweils über einen elektrischen Leiter 27 mit dem in den Kathodenraum 24 hineinragenden Stromkollektor 25 der benachbarten Speicherzelle 20 elektrisch leitend in Verbindung. Die beiden Stromkollektoren 25 und 26 einer jeden Speicherzelle 20 sind über je ein erfindungsgemäßes Überbrückungselement 1 miteinander verbunden. Die Speicherzellen 20 arbeiten bei einer Temperatur von 350 Grad Celsius oder bei einem Temperaturwert der etwas darüber liegt. Sind die Speicherzellen vollständig in Ordnung, so fließt der Strom beim Laden und Entladen durch die Reihenschaltung der Speicherzellen hindurch, insbesondere von einer Speicherzelle zur nächsten. Kommt es bei einer oder mehreren Speicherzellen dieser dargestellten Serienschaltung, zu einem Bruch des Festelektrolyten 22, so wird jede mit einem Defekt behaftete Speicherzelle nach sehr kurzer Zeit hochohmig, da nunmehr die beiden in den Reaktandenräumen enthaltenen Reaktanden zusammenfließen und miteinander reagieren können. Jede defekte Speicherzelle wird hierdurch hochohmig, so daß der von einer Nachbarspeicherzelle normalerweise durch sie hindurchfließende Entlade- bzw. Ladestrom nicht mehr durch sie hindurchfließen kann. Um den Stromkreis durch diese defekte Speicherzelle zu überbrücken, und damit einen Ausfall der gesamten Reihenschaltung zu vermeiden sind die Speicherzellen 20 erfindungsgemäß mit je einem Überbrückungselement versehen. Der Strom, der von einer intakten Speicherzelle zu einer defekten Speicherzelle fließt, wird von dem Überbrückungselement 1 aufgenommen. Das zu jeder Speicherzelle 20 parallel geschaltete Überbrückunselement ist so angeordnet, daß bei normalem Betrieb einer jeden Speicherzelle 20, d. h. wenn diese voll funktionsfähig ist, das in dem Überbrückungselement 1 enthaltene Halbleiterbauelement in Sperr-Richtung gepolt ist. Durch den Bruch des Festelektrolyten 22 wird eine Speicherzelle hochohmig, und es kommt zu einer Spannungsumkehr an den Stromkollektoren 25 und 26. Dies bedeutet, daß sich auch die Spannung, die an den Anschlußelementen 7 und 8 des Überbrückungselementes anliegt, umkehrt und damit das Halbleiter-Bauelement in Durchlaßrichtung gepolt wird. Der von den benachbarten Speicherzellen der Reihenschaltung kommende Strom fließt nun durch das Überbrückungselement, insbesondere das Halbleiter-Bauelement 2. Die mit dem Diodenstrom stark zunehmende ohmsche Verlustwärme heizt das Überbrückungselement 1, besonderes im Bereich des Halbleiterbauelementes 2 so auf, daß dort Temperaturen von über 570 Grad Celsius und mehr erreicht werden. Diese Temperaturerhöhung bewirkt, daß das Halbleiter-Bauelement zumindest im Bereich seiner Außenfläche zu schmelzen beginnt. Ebenso schmelzen die das Halbleiter-Bauelement 2 umgebenden Aluminiumschichten 3. Das flüssige Aluminium bewirkt eine Schmelzpunkterniedrigung des Siliziums. Dadurch kommt es zur Bildung eines Eutektikums, wodurch ein Kurzschlußelement gebildet wird, das dauerhaft den Stromkreis durch die defekte Speicherzelle überbrücken kann.

**Patentanspruch**

Überbrückungselement mit einem Halbleiterbauelement (2) und zwei Anschlußelementen (7, 8) zur Stromkreisüberbrückung einer wiederaufladbaren elektrochemischen Speicherzelle (20), dadurch gekennzeichnet, daß das Halbleiterbauelement (2) als scheibenförmige Siliziumdiode ausgebildet und über je eine elektrisch leitende Schicht (3) aus Aluminium oder einer Aluminiumlegierung mit den beiden Anschlußelementen (7, 8) verbunden ist, daß zur besseren Kontaktierung der elektrischen Anschlußelemente (7, 8) auf jeder elektrisch leitenden Schicht (3) eine erste Nickel-Chrom-Molybdän-Schicht (4) und darauf eine Schicht aus Silber (5) und auf dieser eine Molybdän-Schicht (4) angeordnet ist, daß das erste Anschlußelement (7) mit der ersten und das zweite Anschlußelement (8) mit der zweiten Molybdänschicht (6) verbunden ist, und daß die elektrisch leitenden Schichten (3) und das Halbleiterbauelement (2) bei einer durch den Strom auf 570 °C und mehr erhöhten Temperatur zu einem Kurzschlußelement zusammenlegiert sind.

## Claim

Shunting element comprising a semiconductor component (2) and two connecting elements (7, 8) for shunting the electrical circuit of a rechargeable electrochemical storage cell (20), characterized in that the semiconductor component (2) is constructed as a disc-shaped silicon diode and is connected to the two connecting elements (7, 8) via one electrically conducting layer (3) of aluminium or an aluminium alloy in each case, in that, to form a better contact of the electrical connecting elements (7, 8) a first nicklechromium-molybdenum layer (4) is arranged on each electrically conducting layer (3) and a silver layer (5) thereon and a molybdenum layer (4) on the latter, in that the first connecting element (7) is connected to the first molybdenum layer (6) and the second connecting element (8) to the second, and in that the electrically conducting layers (3) and the semiconductor component (2) are alloyed together to form a short-circuit element at a temperature increased by the current to 570 °C and above.

## Revendication

Barrette de pontage comprenant un composant à semiconducteurs (2) et deux pôles de raccordement (7, 8) pour ponter le circuit de courant d'un élément d'accumulateur électrochimique rechargeable (20), caractérisée par le fait que le composant à semiconducteurs (2) est réalisé sous la forme d'une diode au silicium en forme de plaque et est relié aux deux pôles de raccordement (7, 8) par respectivement une couche électriquement conductrice (3) en aluminium ou en un alliage d'aluminium, que pour améliorer le contact des pôles de raccordement électriques (7, 8), sur chaque couche 3 électriquement conductrice (3) est appliquée une première couche (4) de nickel-chrome-molybdène (4), puis une couche en argent (5) et sur celle-ci une couche de molybdène (4), que le premier pôle de raccordement (7) est relié à la première couche de molybdène (6) et le second pôle de raccordement (8) à la seconde couche de molybdène (6) et que les couches (3), électriquement conductrices (3) et le composant à semiconducteurs (2) sont transformés par fusion en un élément de court-circuit en cas de température portée à 570 °C et plus par le courant.

## Fig.1

n-Zellen

p-Blöcke

m-Zweige

## Fig. 2

Fig.3

0 170 883